# EUROPEAN PATENT APPLICATION

(11) **EP 4 745 781 A1**
(43) Date of publication of application: **20.05.2026**
(21) Application number: 24857675.3
(22) Date of filing: 01.03.2024
(51) Int. Cl.: G06F 11/20

(54) **DISTRIBUTED COMPUTING SYSTEM AND FAILURE HANDLING METHOD FOR DISTRIBUTED COMPUTING SYSTEM**

(30) Priority: 25.08.2023 CN 202311094187
(71) Applicant: Huawei Technologies Co., Ltd., Shenzhen, Guangdong 518129 (CN)
(72) Inventor: CHEN, Huan, Shenzhen, Guangdong 518129 (CN)
(74) Representative: Goddar, Heinz J.
(86) International application number: PCT/CN2024/079515
(87) International publication number: WO 2025/044120

(57) **Abstract**

This application discloses a distributed computing system and a fault handling method for a distributed computing system, and relates to the field of computer technologies. In the distributed computing system provided in this application, because both a computing node group and a backup node access a switching device, when detecting that a fault occurs in the computing node group, a management node in the distributed computing system may configure the switching device to establish a data exchange path between the backup node and the computing node group, so that the backup node can perform data exchange with the computing node group through the data exchange path, to replace a faulty device in which the fault occurs in the computing node group to execute a computing task. This greatly reduces fault handling costs while maintaining original system performance and a network topology.

## Description

This application claims priority to Chinese Patent Application No. 202311094187.1, filed on August 25, 2023 and entitled "DISTRIBUTED COMPUTING SYSTEM AND FAULT HANDLING METHOD FOR DISTRIBUTED COMPUTING SYSTEM", which is incorporated herein by reference in its entirety.

### TECHNICAL FIELD

This application relates to the field of computer technologies, and in particular, to a distributed computing system and a fault handling method for a distributed computing system.

### BACKGROUND

As a scale of computing tasks in scenarios such as artificial intelligence (artificial intelligence, AI) and high performance computing (high performance computing, HPC) is increasingly large, a distributed computing system emerges. In some cases, computing nodes in the system are grouped, and high-bandwidth interconnection is performed between computing nodes in each computing node group, so that high-bandwidth interconnection in a node can be extended to interconnection between nodes, thereby improving cross-node communication performance and further improving execution efficiency of the computing tasks.

In a related technology, to prevent running performance of an entire group from being affected by a node fault in the computing node group or an accelerator fault in a node in the computing node group, redundancy backup is usually performed in the group. For example, redundancy backup is performed on a node in the group. If a node in the group is faulty, a backup node is used to implement fault replacement. For another example, redundancy backup is performed on an accelerator in a node. If an accelerator in the node is faulty, a backup accelerator is used to implement fault replacement.

However, because a scale of computing nodes in a distributed computing system is usually large in scenarios such as AI and HPC, in the foregoing manner, costs are high, and redundancy is large, which easily causes a waste of resources.

### SUMMARY

Embodiments of this application provide a distributed computing system and a fault handling method for a distributed computing system, to effectively reduce fault handling costs. The technical solutions are as follows:
According to a first aspect, a distributed computing system is provided, where the system includes a management node, a switching device, a computing node group, and a backup node, the switching device is physically connected to the computing node group and the backup node separately, each computing node in the computing node group includes a plurality of accelerators, and the backup node includes a plurality of backup accelerators; and
the management node is configured to:
detect that a fault occurs in the computing node group, and determine a faulty device in which the fault occurs, where the faulty device is a faulty computing node or a faulty accelerator in the computing node group; and
configure the switching device, to establish a data exchange path between the backup node and the computing node group via the switching device, where the data exchange path is used for performing data exchange between the backup node and the computing node group, to cause the backup node to replace the faulty device to execute a computing task.

In the distributed computing system provided in this application, the computing task is a distributed parallel computing task. Because both the computing node group and the backup node access the switching device, when detecting that the fault occurs in the computing node group, the management node in the distributed computing system may configure the switching device to establish the data exchange path between the backup node and the computing node group, so that the backup node can perform data exchange with the computing node group through the data exchange path, to replace a faulty device in which the fault occurs in the computing node group to execute the computing task. This greatly reduces fault handling costs while maintaining original system performance and a network topology.

In some embodiments, the switching device is an optical switch, the optical switch includes a plurality of optical fiber ports, and the plurality of optical fiber ports are configured to access the backup node and the computing node group.

In some embodiments, the management node is configured to:
configure an optical path between a first optical fiber port and a second optical fiber port on the optical switch, to establish an optical path between the backup node and the computing node group via the optical switch, where
the optical path is used for performing switching of an optical signal between the backup node and the computing node group, to cause the backup node to replace the faulty device to execute the computing task, the first optical fiber port is an optical fiber port for accessing the backup node, the second optical fiber port is an optical fiber port for accessing the computing node group, and the optical signal is used for carrying data corresponding to the computing task.

In the foregoing manner, the optical switch is used as the switching device. Because the optical switch is a data exchange device that directly performs switching of an optical signal without electrical-to-optical and optical-to-electrical conversion, a network topology of a computing node cluster in the system and communication performance can remain unchanged after fault replacement, thereby ensuring that execution efficiency of the computing task remains unchanged before and after the fault occurs.

In some embodiments, computing nodes in the computing node group are connected to each other via a first switching component, at least one port of the first switching component is configured to access the optical switch, and the first switching component is a switch or a switching chip.

It should be understood that, because a fault that occurs in a computing node group is usually a single point of failure, for example, a single accelerator fault or a single computing node fault, accessing a few ports corresponding to the computing node group to the optical switch can reduce a requirement for a switching port and greatly reduce costs of infrastructure such as an optical module, an optical fiber, and an optical switch while fault replacement is met.

In some embodiments, the backup accelerators in the backup node are connected to each other via a second switching component, at least one port of the second switching component is configured to access the optical switch, and the second switching component is a switch or a switching chip.

In some embodiments, the management node is configured to perform at least one of the following:
if the faulty device includes a first quantity of faulty computing nodes, configuring the switching device, to establish a first data exchange path between a first quantity of backup nodes and at least one first node via the switching device, where the first data exchange path is used for performing data exchange between the first quantity of backup nodes and the at least one first node, to cause the first quantity of backup nodes to replace the first quantity of faulty computing nodes to execute the computing task, and the first node is a node other than the faulty computing node in the computing node group;
if the faulty device includes a second quantity of faulty accelerators, configuring the switching device, to establish a second data exchange path between a second quantity of backup accelerators in at least one backup node and at least one first accelerator via the switching device, where the second data exchange path is used for performing data exchange between the second quantity of backup accelerators and the at least one first accelerator, to cause the second quantity of backup accelerators to replace the second quantity of faulty accelerators to execute the computing task, and the first accelerator is an accelerator other than the faulty accelerator in the computing node group; or
if the faulty device includes a third quantity of faulty accelerators, determining a fourth quantity of nodes to which the third quantity of faulty accelerators belong, and configuring the switching device, to establish a third data exchange path between a fourth quantity of backup nodes and the at least one first node via the switching device, where the third data exchange path is used for performing data exchange between the fourth quantity of backup nodes and the at least one first node, to cause the fourth quantity of backup nodes to replace the node to which the third quantity of faulty accelerators belong to execute the computing task.

In the foregoing manner, the management node configures the switching device based on a quantity of faulty devices, so that the backup node is connected to the computing node group via the switching device. In this manner of dynamically allocating the backup nodes, flexibility of fault replacement is improved while dynamic fault replacement is implemented.

In some embodiments, data exchange between the computing nodes in the computing node group is performed based on a first bandwidth, and the backup node is configured to perform data exchange with the computing node group through the data exchange path based on the first bandwidth, to replace the faulty device to execute the computing task.

In this way, after the fault occurs, the network topology of the computing node cluster in the system and the communication performance can remain unchanged after the fault replacement, thereby ensuring that execution efficiency of the computing task remains unchanged before and after the fault occurs.

In some embodiments, the system includes a plurality of computing node groups, each computing node group includes a same quantity of computing nodes, data exchange between the computing node groups is performed based on a second bandwidth, and the first bandwidth is greater than or equal to the second bandwidth.

In some embodiments, bandwidths for data exchange between computing nodes in different computing node groups are different, and the bandwidths for data exchange between computing nodes in different computing node groups are all greater than or equal to the second bandwidth.

In some embodiments, each computing node in the computing node group includes a same quantity of accelerators, data exchange between the accelerators is performed based on a third bandwidth, and the first bandwidth is less than or equal to the third bandwidth.

In some embodiments, data exchange between the backup accelerators in the backup node is performed based on the third bandwidth.

According to the foregoing method, a cluster including the plurality of computing node groups may use a hierarchical design with different bandwidths, to improve execution efficiency of the computing task.

In some embodiments, the distributed computing system is configured to execute a distributed parallel training task of an artificial intelligence AI model, and the faulty device is configured to execute a subtask of the distributed parallel training task.

According to a second aspect, an embodiment of this application provides a fault handling method for a distributed computing system, applied to a management node in the distributed computing system, where the system further includes a switching device, a computing node group, and a backup node, the switching device is physically connected to the computing node group and the backup node separately, each computing node in the computing node group includes a plurality of accelerators, the backup node includes a plurality of backup accelerators, and the method includes:
detecting that a fault occurs in the computing node group, and determining a faulty device in which the fault occurs, where the faulty device is a faulty computing node or a faulty accelerator in the computing node group; and
configuring the switching device, to establish a data exchange path between the backup node and the computing node group via the switching device, where the data exchange path is used for performing data exchange between the backup node and the computing node group, to cause the backup node to replace the faulty device to execute a computing task.

In some embodiments, the switching device is an optical switch, the optical switch includes a plurality of optical fiber ports, the plurality of optical fiber ports are configured to access the backup node and the computing node group, and the configuring the switching device to establish the data exchange path between the backup node and the computing node group via the switching device includes:
configuring an optical path between a first optical fiber port and a second optical fiber port on the optical switch, to establish an optical path between the backup node and the computing node group via the optical switch, where
the optical path is used for performing switching of an optical signal between the backup node and the computing node group, to cause the backup node to replace the faulty device to execute the computing task, the first optical fiber port is an optical fiber port for accessing the backup node, the second optical fiber port is an optical fiber port for accessing the computing node group, and the optical signal is used for carrying data corresponding to the computing task.

In some embodiments, the configuring the switching device, to establish the data exchange path between the backup node and the computing node group via the switching device includes at least one of the following:
if the faulty device includes a first quantity of faulty computing nodes, configuring the switching device, to establish a first data exchange path between a first quantity of backup nodes and at least one first node via the switching device, where the first data exchange path is used for performing data exchange between the first quantity of backup nodes and the at least one first node, to cause the first quantity of backup nodes to replace the first quantity of faulty computing nodes to execute the computing task, and the first node is a node other than the faulty computing node in the computing node group;
if the faulty device includes a second quantity of faulty accelerators, configuring the switching device, to establish a second data exchange path between a second quantity of backup accelerators in at least one backup node and at least one first accelerator via the switching device, where the second data exchange path is used for performing data exchange between the second quantity of backup accelerators and the at least one first accelerator, to cause the second quantity of backup accelerators to replace the second quantity of faulty accelerators to execute the computing task, and the first accelerator is an accelerator other than the faulty accelerator in the computing node group; or
if the faulty device includes a third quantity of faulty accelerators, determining a fourth quantity of nodes to which the third quantity of faulty accelerators belong, and configuring the switching device, to establish a third data exchange path between a fourth quantity of backup nodes and the at least one first node via the switching device, where the third data exchange path is used for performing data exchange between the fourth quantity of backup nodes and the at least one first node, to cause the fourth quantity of backup nodes to replace the node to which the third quantity of faulty accelerators belong to execute the computing task.

According to a third aspect, an embodiment of this application provides a fault handling apparatus for a distributed computing system, applied to a management node in the distributed computing system, where the system further includes a switching device, a computing node group, and a backup node, the switching device is physically connected to the computing node group and the backup node separately, each computing node in the computing node group includes a plurality of accelerators, the backup node includes a plurality of backup accelerators, and the apparatus includes at least one functional module configured to perform the fault handling method for a distributed computing system according to any one of the second aspect or the possible implementations of the second aspect.

According to a fourth aspect, an embodiment of this application provides a management device, where the management device includes a processor and a memory, and the processor is configured to execute at least one segment of program code stored in the memory, to cause the management device to perform the fault handling method for a distributed computing system according to any one of the second aspect or the possible implementations of the second aspect.

According to a fifth aspect, an embodiment of this application provides a computer-readable storage medium, where the computer-readable storage medium is configured to store at least one segment of program code, and when the at least one segment of program code is run on a management device, the management device is caused to perform the fault handling method for a distributed computing system according to any one of the second aspect or the possible implementations of the second aspect. The storage medium includes but is not limited to a volatile memory, for example, a random access memory, or a non-volatile memory, for example, a flash memory, a hard disk drive (hard disk drive, HDD), or a solid-state drive (solid-state drive, SSD).

According to a sixth aspect, an embodiment of this application provides a computer program product. When the computer program product runs on a management device, the management device is caused to perform the fault handling method for a distributed computing system according to any one of the second aspect or the possible implementations of the second aspect. The computer program product may be a software installation package. When the foregoing method needs to be implemented, the computer program product may be downloaded and executed on the management device.

According to a seventh aspect, an embodiment of this application provides a device cluster, where the device cluster includes a management device, a switching device, and at least one computing device, each device includes a processor and a memory, and the processor of each device is configured to execute at least one segment of program code stored in the memory of each device, to cause the device cluster to implement a function of the distributed computing system according to any one of the first aspect or the possible implementations of the first aspect.

According to an eighth aspect, an embodiment of this application provides a computer program product. When the computer program product runs on a device cluster, the device cluster is caused to implement a function of the distributed computing system according to any one of the first aspect or the possible implementations of the first aspect.

According to a ninth aspect, an embodiment of this application provides a computer-readable storage medium, where the computer-readable storage medium is configured to store at least one segment of program code, and when the at least one segment of program code is executed by a device cluster, the device cluster is caused to implement a function of the distributed computing system according to any one of the first aspect or the possible implementations of the first aspect.

### BRIEF DESCRIPTION OF DRAWINGS

FIG. 1 is a diagram of distributed training of an AI model according to a related technology;
FIG. 2 is a diagram of a distributed computing system according to a related technology;
FIG. 3 is a fault diagram of a distributed computing system according to a related technology;
FIG. 4 is a diagram of a distributed computing system according to an embodiment of this application;
FIG. 5 is a diagram of another distributed computing system according to an embodiment of this application;
FIG. 6 is a diagram of a structure of a device according to an embodiment of this application;
FIG. 7 is a diagram of a structure of another device according to an embodiment of this application;
FIG. 8 is a flowchart of a fault handling method for a distributed computing system according to an embodiment of this application;
FIG. 9 is a diagram of fault replacement according to an embodiment of this application;
FIG. 10 is a diagram of another fault replacement according to an embodiment of this application;
FIG. 11 is a diagram of still another fault replacement according to an embodiment of this application; and
FIG. 12 is a diagram of a structure of a fault handling apparatus for a distributed computing system according to an embodiment of this application.

### DESCRIPTION OF EMBODIMENTS

To make the objectives, technical solutions, and advantages of this application clearer, the following further describes the implementations of this application in detail with reference to the accompanying drawings. It should be noted that information (including but not limited to user equipment information, personal information of a user, and the like), data (including but not limited to data used for analysis, stored data, displayed data, and the like), and signals in this application are used under authorization by the user or full authorization by all parties, and collection, use, and processing of related data need to conform to related laws, regulations, and standards of related countries and regions. For example, fault information generated by a computing node group, configuration information of a switch, and the like in this application are all obtained under sufficient authorization.

**For ease of understanding, the following first describes key terms and key concepts in this application.**

High performance computing (high performance computing, HPC) is a high performance computing architecture. Hundreds of computing nodes (such as servers) are interconnected through a network to form at least one HPC cluster. Computing nodes in a same HPC cluster work in parallel to improve a data processing speed and implement high performance computing.

An artificial intelligence (artificial intelligence, AI) model is a type of mathematical algorithm model that uses a machine learning idea to resolve actual problems. The AI model includes a large quantity of parameters and calculation formulas (or calculation rules).

An accelerator, also referred to as an acceleration device, or an acceleration card, is a type of dedicated hardware accelerator or computer system, and aims to accelerate computing processes in an AI scenario and an HPC scenario. For example, the accelerator is a graphics processing unit (graphics processing unit, GPU), a neural network processing unit (neural network processing unit, XPU), an intelligent processing unit (intelligent processing unit, IPU), a tensor processing unit (tensor processing unit, TPU), a domain-specific architecture (domain-specific architecture, DSA) chip, or the like. A type of the accelerator is not limited in this application.

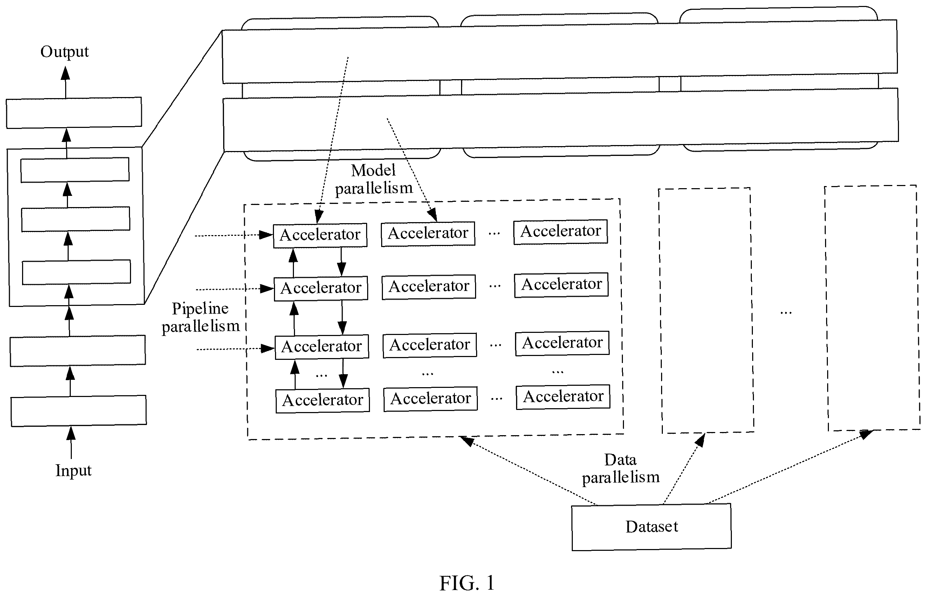

Distributed training of an AI model means that a model is split in a parallel splitting manner, like model parallelism, pipeline parallelism, or data parallelism, for distributed parallel training on a plurality of accelerators in a plurality of computing nodes (such as servers) in a distributed computing system. During the entire training, different distributed parallel instances perform data exchange and communication in real time through a network between accelerators in the computing nodes and a network between the computing nodes. For example, FIG. 1 is a diagram of distributed training of an AI model according to a related technology. As shown in FIG. 1, model parallelism means that different parts at a same layer in the AI model are allocated to a plurality of accelerators for parallel training. Pipeline parallelism means that different consecutive layers in the AI model are allocated to a plurality of accelerators for parallel training. Data parallelism means that a training dataset is split for parallel training on a plurality of accelerators. It should be understood that both a parallel splitting strategy and computing node allocation match a network topology of a computing node cluster in the distributed computing system. In some embodiments, the model parallelism, the pipeline parallelism, and the data parallelism have different communication bandwidth requirements. The model parallelism has a highest communication bandwidth requirement, the pipeline parallelism has a relatively low communication bandwidth requirement because a data amount is small, and the data parallelism also has a relatively low communication bandwidth requirement because the data parallelism may be overlapped by using calculation time. Therefore, in the related technology, when a computing node configured to execute an AI computing task is designed, high-bandwidth interconnection is used between accelerators in the computing node, to meet a high bandwidth requirement of the model parallelism, and the pipeline parallelism and the data parallelism are implemented through a network between computing nodes. Correspondingly, during model training, model parallel instances are usually placed in a same computing node, to match a high bandwidth design between accelerators in the computing node. Pipeline parallel instances and data parallel instances are allocated to different computing nodes, and have relatively low communication bandwidth requirements.

A mixture of experts (mixture of experts, MoE) system is an integrated learning technology developed in the field of neural networks. The MoE divides a prediction modeling task into several subtasks, trains an expert model (expert model) on each subtask, and develops a gating model (gating model). The model learns, based on a to-be-predicted input, which expert is to be trusted, and combines prediction results.

A high-bandwidth internet is a computer internet that can provide high-bandwidth, high-speed, and high-quality network transmission services. The internet has features such as large capacity, high speed, and low latency, and can provide support for applications such as large-scale data transmission, high-definition video transmission, collaborative work, and cloud computing.

An optical switch (optical switch) is a data exchange device that directly performs switching of an optical signal without electrical-to-optical and optical-to-electrical conversion, and includes a plurality of optical fiber ports. The optical switch can directly switch an optical signal at an input port to any output port.

**The following describes an application scenario and an implementation environment in this application.**

The technical solutions provided in this application can be applied to scenarios such as AI and HPC. For a distributed computing system configured to execute a distributed parallel computing task, a new networking architecture is provided, to reduce fault handling costs caused by a computing node fault or an accelerator fault in a computing node. The following first describes an application scenario of this application with reference to a distributed computing system provided in a related technology.

In the related technology, an AI scenario is used as an example. As a model scale is increasingly large, a quantity of accelerators in a single computing node cannot meet a model parallel splitting requirement, and model parallelism usually needs to cross a plurality of computing nodes. In addition, with gradual evolution of large models, a MoE sparse model and a new expert parallelism manner emerge. All-to-all communication between training instances is introduced into expert parallelism, and higher-bandwidth interconnection across a plurality of computing nodes is required. In view of this, to improve training performance of an AI model, in the related technology, computing nodes in a system are grouped, and high-bandwidth interconnection is performed between computing nodes in each computing node group. In this way, high-bandwidth interconnection in a node can be extended to interconnection between nodes, that is, interconnection between computing nodes in a computing node group has a same bandwidth (or a similar bandwidth) as that in the computing node, thereby improving cross-node communication performance and further improving the training performance of the AI model. For example, for collective communication that has a high bandwidth requirement, such as model parallelism, collective communication performance between nodes can be effectively improved in the foregoing manner. In some embodiments, the computing node group may also be referred to as an affinity group, a superpod (a supercomputer cluster), a super node, or the like, and is collectively referred to as a computing node group in this application. Details are not described subsequently.

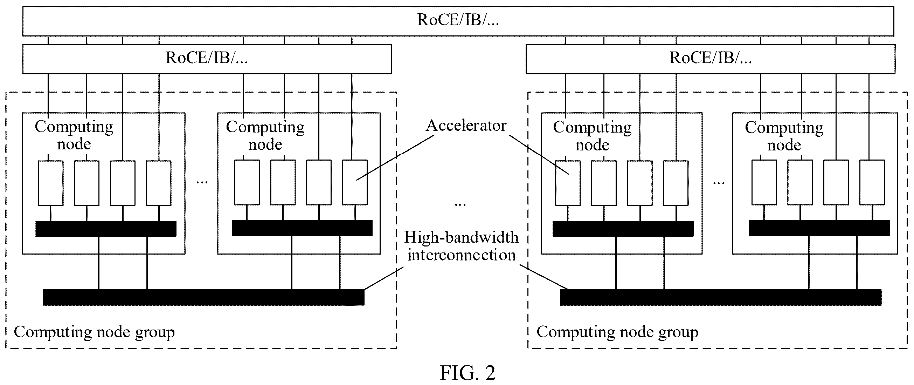

For example, FIG. 2 is a diagram of a distributed computing system according to a related technology. As shown in FIG. 2, in the related technology, the distributed computing system includes a plurality of computing node groups, and data exchange between the computing node groups is performed through a network between nodes. The network between nodes is, for example, Ethernet, a fiber channel, remote direct memory access (remote direct memory access, RDMA), a RDMA over converged Ethernet (RDMA over converged Ethernet, RoCE) network, or an InfiniBand (InfiniBand, IB) network. The figure is merely an example for description, and is not limited thereto. High-bandwidth interconnection is used between computing nodes in each computing node group and between accelerators in each computing node, for example, an Nvidia link (NvLink), a peripheral component interconnect express (peripheral component interconnect express, PCIe), a compute express link (compute express link, CXL), universal chiplet interconnect express (universal chiplet interconnect express, UCIe), a Huawei cache coherence bus (Huawei cache coherent system, HCCS), or cache coherent interconnect for accelerators (cache coherent interconnect for accelerators, CCIX) is used. This is not limited thereto.

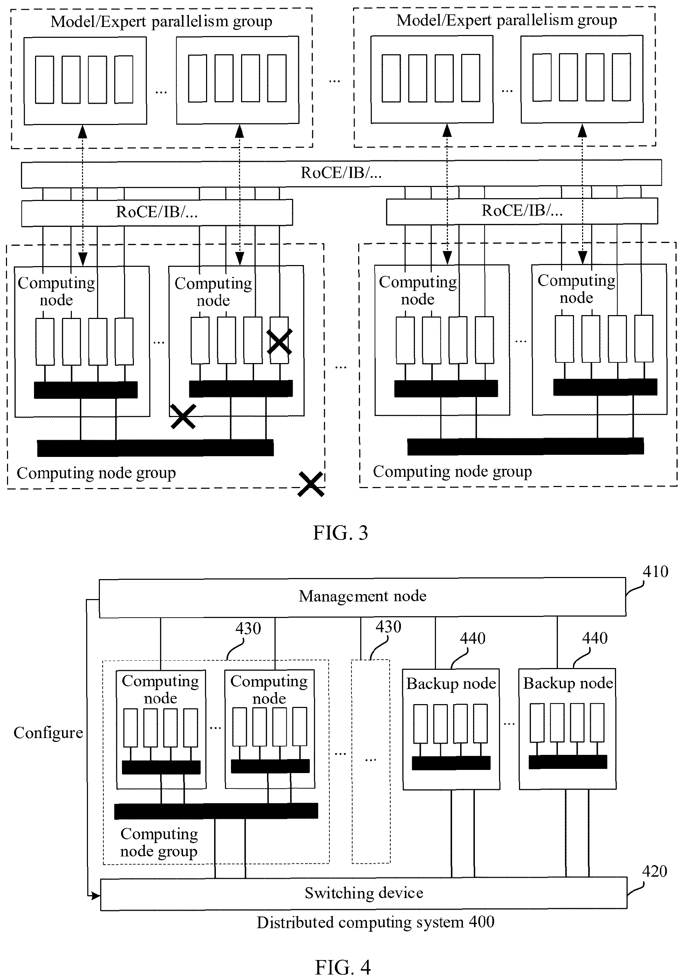

In the distributed computing system shown in FIG. 2, because distributed training of an AI model requires that model parallel splitting strictly matches a network topology of a computing node cluster, network topology structures of different instances at different levels of the cluster are strictly homogeneous. For example, quantities of available accelerators in different computing nodes are strictly consistent, and quantities of available computing nodes in different computing node groups are strictly consistent. If an accelerator or a computing node is faulty, quantities of accelerators in a computing node and a computing node group are inconsistent with those in other computing nodes and other computing node groups. As a result, a computing node and a computing node group in which faults occur no longer meet a model parallel splitting requirement, and cannot be scheduled and used in an entire computing task. As shown in FIG. 3, FIG. 3 is a fault diagram of a distributed computing system according to a related technology. However, because a scale of a computing node group is generally designed to be large (for example, one computing node group includes dozens of computing nodes and hundreds of accelerators), if the entire computing node group cannot be used in a computing task, a serious waste or resource loss is caused. In addition, if training resources are insufficient, parallel training planning and splitting need to be re-performed for model parallel training. This greatly affects overall time of model training.

In view of this, this application provides a new networking architecture, to prevent running performance of an entire group from being affected by a computing node fault in the computing node group or an accelerator fault in a computing node in the computing node group, and greatly reduce fault handling costs.

**The following describes a distributed computing** system **provided in this application with reference to** **FIG. 4****.**

FIG. 4 is a diagram of a distributed computing system according to an embodiment of this application. As shown in FIG. 4, the distributed computing system 400 provided in this application includes a management node 410, a switching device 420, computing node groups 430, and backup nodes 440. The switching device 420 is physically connected to the computing node group 430 and the backup node 440 separately. In some embodiments, a node is also referred to as a device. This is not limited herein.

In this embodiment of this application, the distributed computing system 400 is a distributed computing system having a cross-node communication capability. In the distributed computing system 400, the management node 410, the switching device 420, the computing node group 430, and the backup node 440 are interconnected through a network (for example, the network interconnection manner between nodes, such as RDMA, RoCE, or IB mentioned in FIG. 2 is used). Details are not described herein again. It should be noted that another manner may be used for network interconnection between nodes in the distributed computing system 400. This is not limited herein. In this way, the distributed computing system 400 can execute various distributed parallel computing tasks. For example, the distributed parallel computing task includes a distributed parallel training task in an AI scenario, a big data parallel computing task and a distributed cloud computing task in an HPC scenario, and the like. This application is not limited thereto. The distributed cloud computing task is a computing task executed by a computing node in a virtualization form such as a virtual machine or a container in AI, HPC, image computing, or another scenario.

The management node 410 is configured to manage the distributed computing system 400, for example, perform cluster management, data exchange control, and faulty computing node and faulty accelerator detection on the distributed computing system 400, and configure data exchange paths between switching ports on the switching device 420. This application is not limited thereto. In some embodiments, the management node 410 is a server, a desktop computer, or the like. This application is not limited thereto. An example in which the management node 410 is a server is used. The management node 410 may be an independent physical server, or may be a server cluster or a distributed system including a plurality of physical servers, or may be a cloud server that provides basic cloud computing services such as a cloud service, a cloud database, cloud computing, a cloud function, cloud storage, a network service, cloud communication, a middleware service, a domain name service, a security service, a content delivery network (content delivery network, CDN), and a big data and artificial intelligence platform. Alternatively, the management node 410 may be a node in a virtualization form such as a virtual machine or a container. In this case, the virtual machine or the container may be deployed in at least one computing device (for example, a server). In addition, there may be one or more management nodes 410. This is not limited in this application.

The switching device 420 is a device having a data exchange capability, and the computing node group 430 can be connected to the backup node 440 via the switching device 420, that is, establish a data exchange path between the backup node 440 and the computing node group 430, to cause data exchange to be performed between the computing node group 430 and the backup node 440 through the data exchange path. For example, the switching device 420 is an optical switch or another device that can implement dynamic direct connection at a physical layer. This application is not limited thereto. In addition, there may be one or more switching devices 420. This is not limited in this application.

The computing node group 430 is configured to execute a computing task of the distributed computing system 400. The computing task is a distributed parallel computing task, for example, a distributed parallel training task of an AI model or an HPC distributed parallel computing task. This application is not limited thereto. For example, if the computing task is the distributed parallel training task of the AI model, computing nodes in the computing node group 430 are configured to execute subtasks of the distributed parallel training task. In addition, there may be one or more computing node groups 430. This is not limited in this application. For any computing node group 430, the computing node group 430 includes a plurality of computing nodes, and each computing node includes a plurality of accelerators. In this embodiment of this application, the computing nodes in the computing node group 430 and the accelerators in each computing node are physically connected, for example, by using a fixed backplane high-speed bus (for example, the NvLink and the HCCS mentioned in FIG. 2, and details are not described herein), or through physical connection such as a switching board, a switch, or a switching chip. It should be noted that the distributed computing system 400 may further implement high-bandwidth interconnection in another manner. This is not limited herein. In this way, interconnection between the computing nodes in the computing node group 430 has a same bandwidth as that in the computing node (where it should be understood that bandwidths herein are not strictly equal, may be different, and can be configured based on an actual requirement), thereby effectively improving communication performance between the computing nodes in the computing node group 430, that is, improving execution efficiency of the computing task.

In some embodiments, if there are a plurality of computing node groups 430, each computing node group 430 includes a same quantity of computing nodes, and each computing node includes a same quantity of accelerators, a computing node cluster including the plurality of computing node groups 430 may use a hierarchical design with different bandwidths, to improve execution efficiency of the computing task. For example, for any computing node group 430, data exchange between the computing nodes in the computing node group 430 is performed based on a first bandwidth to execute the computing task; and data exchange between the computing node groups 430 is performed based on a second bandwidth to execute the computing task, where the first bandwidth is greater than or equal to the second bandwidth; and for any computing node, data exchange between the accelerators in the computing node is performed based on a third bandwidth to execute the computing task, where the first bandwidth is less than or equal to the third bandwidth. It is clear that bandwidths for data exchange between computing nodes in different computing node groups may be the same or may be different. If the bandwidths are different, the bandwidths for data exchange between computing nodes in different computing node groups are all greater than or equal to the second bandwidth, that is, the bandwidths for data exchange between nodes in the groups are greater than or equal to bandwidths for component data exchange. In this way, execution efficiency of the computing task can be improved.

The backup node 440 is configured to replace a faulty device in which a fault occurs in the computing node group 430 to execute the computing task. The faulty device is a faulty computing node or a faulty accelerator in the computing node group 430. In addition, there may be one or more backup nodes 440. This is not limited in this application. For any backup node 440, the backup node 440 includes a plurality of backup accelerators, and high-bandwidth interconnection is used between backup accelerators in the backup node 440. This is similar to that of the computing node group 430, and details are not described again. In some embodiments, a cluster including a plurality of backup nodes 440 is referred to as a backup node group or a backup pool. This application is not limited thereto. In addition, if there are the plurality of backup nodes 440, high-bandwidth interconnection may be used or may not be used between the backup nodes 440. This application is not limited thereto. In some embodiments, a bandwidth for data exchange between the backup accelerators in the backup node 440 is the same as a bandwidth for data exchange between the accelerators in the computing node group 430. This is not limited in this application.

In addition, the computing node and the backup node in the distributed computing system 400 may be an independent physical server, or may be a server cluster or a distributed system including a plurality of physical servers, or may be a cloud server that provides basic cloud computing services such as a cloud service, a cloud database, cloud computing, a cloud function, cloud storage, a network service, cloud communication, a middleware service, a domain name service, a security service, a CDN, and a big data and artificial intelligence platform. These nodes may alternatively be nodes in a virtualization form such as a virtual machine or a container. In this case, the virtual machine or the container may be deployed in at least one computing device (for example, a server). The accelerator in the computing node and the backup accelerator in the backup node are, for example, a GPU, an XPU, an IPU, a TPU, or a DSA chip. This application is not limited thereto.

For example, in the distributed computing system 400, the management node 410 can perform detection on the running status of the computing node group 430, and if it is detected that a fault occurs in the computing node group 430, determine the faulty device in which the fault occurs, where the faulty device is a faulty computing node or a faulty accelerator in the computing node group 430; and configure the switching device 420, to establish the data exchange path between the backup node 440 and the computing node group 430 via the switching device 420, where the data exchange path is used for performing data exchange between the backup node 440 and the computing node group 430, to cause the backup node 440 to replace the faulty device to execute the computing task. In this way, fault handling costs are greatly reduced while original system performance and a network topology are maintained. For example, if the faulty device in the computing node group 430 includes two faulty computing nodes, data exchange paths between two backup nodes 440 and the computing node group 430 are established via the switching device 420. For another example, if the faulty device in the computing node group 430 includes two faulty accelerators, data exchange paths between two backup accelerators in the backup node 440 and the computing node group 430 are established via the switching device 420. This process may also be understood as a process in which the management node 410 dynamically allocates the backup nodes when detecting the faulty device. A detailed allocation manner thereof is described in a subsequent method embodiment, and details are not described herein again.

In some embodiments, the distributed computing system 400 may further access a wireless network or another wired network, for example, the wireless network or the another wired network uses a standard communication technology and/or protocol. A network is usually a transmission control protocol/internet protocol (transmission control protocol/internet protocol, TCP/IP) network, an RDMA network, or the like in a data center network. In some other embodiments, customized and/or dedicated data communication technologies can alternatively be used to replace or supplement the foregoing data communication technology. For example, there is multi-plane network interconnection (which may be shared or independent) between nodes in the distributed computing system 400: a management plane network (used for cluster management and data transmission control), a data plane network (used for downloading data such as an AI training dataset and an HPC computing dataset), a parameter plane network (used for parameter synchronization across nodes or across computing node groups), and the like. This application is not limited thereto.

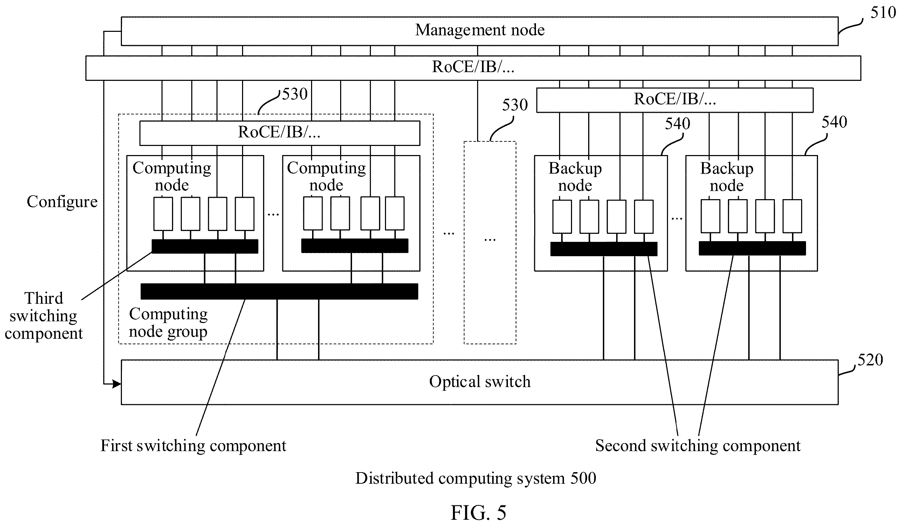

**Refer to** **FIG. 5****. The following describes the foregoing distributed computing system 400 by using an example in which the switching device 420 is an optical switch.**

FIG. 5 is a diagram of another distributed computing system according to an embodiment of this application. As shown in FIG. 5, a distributed computing system 500 provided in this application includes a management node 510, an optical switch 520, computing node groups 530, and backup nodes 540. The optical switch 520 is physically connected to the computing node group 530 and the backup node 540 separately.

The management node 510 is configured to manage the distributed computing system 500. Refer to the content shown in FIG. 4. Details are not described herein again.

The optical switch 520 includes a plurality of optical fiber ports, and the plurality of optical fiber ports are configured to access the computing node group 530 and the backup node 540.

Computing nodes in the computing node group 530 are connected to each other via a first switching component, to implement data exchange between the computing nodes. The first switching component is a switch, a switching chip, or a switching board. This application is not limited thereto. In some embodiments, at least one port of the first switching component is configured to access the optical switch 520. That is, a few ports corresponding to the computing node group 530 access the optical switch 520. It should be understood that, because a fault that occurs in the computing node group 530 is usually a single point of failure, for example, a single accelerator fault or a single computing node fault, accessing the few ports corresponding to the computing node group 530 to the optical switch 520 can reduce a requirement for a switching port and greatly reduce costs of infrastructure such as an optical module, an optical fiber, and an optical switch while fault replacement is met. It is clear that a preset quantity of ports of the first switching component may access the optical switch 520. The preset quantity can be configured based on an actual requirement or historical experience. This application is not limited thereto. In addition, for any computing node in the computing node group 530, accelerators in the computing node are connected via a third switching component, to implement data exchange between the accelerators. The third switching component is a switching chip or a switching board. This application is not limited thereto.

Backup accelerators in the backup node 540 are connected to each other via a second switching component, to implement data exchange between the backup accelerators. The second switching component is a switching chip, a switching board, or the like. This application is not limited thereto. In some embodiments, at least one port of the second switching component is configured to access the optical switch 520, that is, the few ports corresponding to the backup node 540 access the optical switch 520, to reduce a requirement for a switching port and greatly reduce costs of infrastructure such as an optical module, an optical fiber, and an optical switch while fault replacement is met. In addition, if there are a plurality of backup nodes 540, each backup node 540 accesses the optical switch 520, to meet a fault replacement requirement.

In the foregoing distributed computing system 500, the optical switch is used as the switching device. Because the optical switch is a data exchange device that directly performs switching of an optical signal without electrical-to-optical and optical-to-electrical conversion, a network topology of a computing node cluster in the system and communication performance can remain unchanged after fault replacement, thereby ensuring that execution efficiency of the computing task remains unchanged before and after the fault occurs.

**The following describes hardware structures of nodes in the distributed computing system 400 and the distributed computing system 500.**

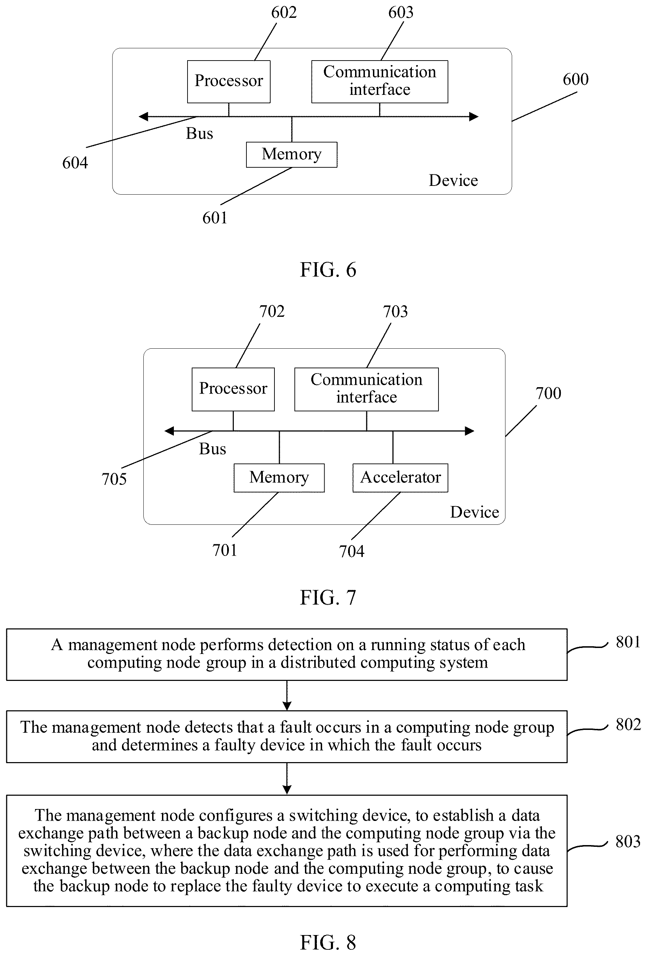

FIG. 6 is a diagram of a structure of a device according to an embodiment of this application. As shown in FIG. 6, the device 600 includes a memory 601, a processor 602, a communication interface 603, and a bus 604, and can be configured as a management node in the distributed computing system 400 and the distributed computing system 500. For example, the device 600 is also referred to as a management device. The memory 601, the processor 602, and the communication interface 603 are communicatively connected to each other through the bus 604.

The memory 601 may be a read-only memory (read-only memory, ROM), another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, optical disc storage (including a compact optical disc, a laser disc, an optical disc, a digital versatile disc, a Blu-ray disc, or the like), a magnetic disk storage medium or another magnetic storage device, or any other medium that can be used to carry or store expected program code in a form of instructions or a data structure and that can be accessed by a computer. However, this is not limited thereto. For example, the memory 601 is configured to store at least one segment of program code. When the program code stored in the memory 601 is executed by the processor 602, the processor 602 and the communication interface 603 are configured to perform steps related to the management node in the following method embodiment.

The processor 602 may be a network processor (network processor, NP), a central processing unit (central processing unit, CPU), an application-specific integrated circuit (application-specific integrated circuit, ASIC), or an integrated circuit configured to control program execution of the solutions of this application. The processor 602 may be a single-core (single-CPU) processor, or may be a multi-core (multi-CPU) processor. There may be one or more processors 602. The communication interface 603 uses a transceiver module such as a transceiver, to implement communication between the computing device 600 and another device or a communication network. For example, data may be obtained through the communication interface 603.

The memory 601 and the processor 602 may be disposed separately, or may be integrated together.

The bus 604 may include a path for transmitting information between components (for example, the memory 601, the processor 602, and the communication interface 603) of the computing device 600.

FIG. 7 is a diagram of a structure of another device according to an embodiment of this application. As shown in FIG. 7, the device 700 includes a memory 701, a processor 702, a communication interface 703, an accelerator 704, and a bus 705, and can be configured as a computing node and a backup node in the distributed computing system 400 and the distributed computing system 500. For example, the device 700 is also referred to as a computing device. The memory 701, the processor 702, the communication interface 703, and the accelerator 704 are communicatively connected to each other through the bus 705.

The memory 701 may be a ROM or another type of static storage device that can store static information and instructions, or a RAM or another type of dynamic storage device that can store information and instructions, or may be an EEPROM, a CD-ROM or another compact disc storage, optical disc storage (including a compact optical disc, a laser disc, an optical disc, a digital versatile disc, a Blu-ray disc, or the like), a magnetic disk storage medium or another magnetic storage device, or any other medium that can be used to carry or store expected program code in a form of instructions or a data structure and that can be accessed by a computer. However, this is not limited thereto. For example, the memory 701 is configured to store at least one segment of program code. When the program code stored in the memory 701 is executed by the processor 702, the processor 702 and the communication interface 703 are configured to perform functions related to the computing node and the backup node in the following method embodiment.

The processor 702 may be an NP, a CPU, an ASIC, or an integrated circuit configured to control program execution of the solutions of this application. The processor 702 may be a single-core (single-CPU) processor, or may be a multi-core (multi-CPU) processor. There may be one or more processors 702. The communication interface 703 uses a transceiver module such as a transceiver, to implement communication between the computing device 700 and another device or a communication network. For example, data may be obtained through the communication interface 703.

The accelerator 704 may be a GPU, an XPU, an IPU, a TPU, a DSA chip, or the like. For example, the accelerator 704 is configured to provide computing power for a computing task running on the computing device 700, to accelerate a computing process. In addition, there may be one or more accelerators 704. This is not limited in this application.

The memory 701, the processor 702, and the accelerator 704 may be disposed separately, or may be integrated together.

The bus 705 may include a path for transmitting information between components (for example, the memory 701, the processor 702, the communication interface 703, and the accelerator 704) of the computing device 700.

Based on the foregoing descriptions of the distributed computing system, the following describes, with reference to FIG. 8, a fault handling method for a distributed computing system provided in this application. FIG. 8 is a flowchart of a fault handling method for a distributed computing system according to an embodiment of this application. As shown in FIG. 8, the method is applied to the distributed computing system shown in FIG. 4 or FIG. 5, and includes the following step 801 to step 803.

**801: A management node performs detection on a running status of each computing node group in the distributed computing system.**

In a process in which each computing node group in the distributed computing system executes a computing task, the management node can determine, based on the running status of the computing node group, whether a fault occurs in the computing node group. A manner in which the management node performs detection on the running status of the computing node group is not limited in this application. For example, an agent module may be configured in the computing node group (for example, the agent module is configured in each computing node), and the agent module is configured to report a related fault situation to the management node when it is detected that a fault occurs in the computing node group. For another example, the management node collects statistics on a cache error reported by each computing node group, and if a quantity of cache errors reported by a computing node group reaches a threshold, it is determined that a fault occurs in the computing node group. For another example, the management node performs polling mechanism detection on each computing node in the computing node group, and when an abnormality is detected, determines that a fault occurs in a corresponding computing node.

**802: The management node detects that a fault occurs in a computing node group, and determines a faulty device in which the fault occurs.**

The computing node group is any computing node group in the distributed computing system. The faulty device is a faulty computing node or a faulty accelerator in which the fault occurs in the computing node group. It should be understood that a type of the fault that occurs in the computing node group is not limited in this application. For example, the fault is a network communication fault, a hardware fault, or the like. In this step, if detecting that a fault occurs in a computing node group, the management node determines, based on fault information, a faulty device in which the fault occurs. For example, the fault information includes a quantity of faulty devices, an identifier ID, and the like. This application is not limited thereto. For example, the computing task is a distributed parallel training task of an AI model, and the faulty device is configured to execute a subtask of the distributed parallel training task.

**803: The management node configures a switching device, to establish a data exchange path between a backup node and the computing node group via the switching device, where the data exchange path is used for performing data exchange between the backup node and the computing node group, to cause the backup node to replace the faulty device to execute the computing task.**

The management node configures the switching device based on the faulty device in which the fault occurs, to establish the data exchange path between the backup node and the computing node group via the switching device, that is, the backup node is connected to the computing node group via the switching device, so that the data exchange between the backup node and the computing node group can be performed via the switching device. In this way, the backup node can replace the faulty device to execute the computing task.

For example, the switching device is an optical switch. The management node configures an optical path between a first optical fiber port and a second optical fiber port on the optical switch, to establish an optical path between the backup node and the computing node group via the optical switch, so that the backup node can perform switching of an optical signal with the computing node group through the optical path, to replace the faulty device to execute the computing task. The first optical fiber port is an optical fiber port for accessing the backup node, the second optical fiber port is an optical fiber port for accessing the computing node group, and the optical signal is used for carrying data corresponding to the computing task. It should be understood that the optical switch includes an optical switching structure that routes the optical signal from an input port to an output port. The management node can switch the optical signal at the input port on the optical switch to any output port by configuring the optical switch, to connect the backup node to the computing node group, that is, establish the data exchange path between the backup node and the computing node group. It should be noted that, if the switching device is another device that can implement dynamic direct connection at a physical layer, the management node configures the device similarly, so that a signal at an input port on the device is switched to any output port, to establish the data exchange path between the backup node and the computing node group.

In some embodiments, the management node configures the switching device based on a quantity of faulty devices, to establish the data exchange path between the backup node and the computing node group via the switching device. In this manner of dynamically allocating backup nodes, flexibility of fault replacement is improved while dynamic fault replacement is implemented. The following describes this configuration manner, including the following cases.

**Case 1:** If the faulty device includes a first quantity of faulty computing nodes, the switching device is configured, to establish a first data exchange path between a first quantity of backup nodes and at least one first node via the switching device. The first data exchange path is used for performing data exchange between the first quantity of backup nodes and the at least one first node, to cause the first quantity of backup nodes to replace the first quantity of faulty computing nodes to execute the computing task.

The first node is a node other than the faulty computing node in the computing node group, and the first quantity is a positive integer. The method shown in Case 1 is that, for the computing node group in which the fault occurs, based on the quantity of faulty computing nodes in the group, the same quantity of backup nodes are scheduled from a backup pool for replacement, to cause network topology structures of a computing node cluster in the distributed computing system before and after the fault occurs to be equivalent.

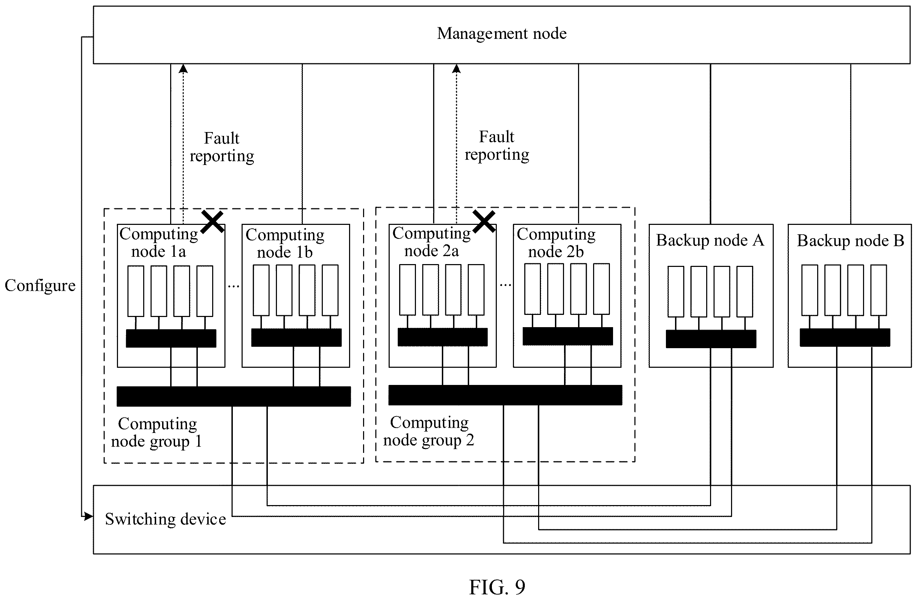

For example, FIG. 9 is a diagram of fault replacement according to an embodiment of this application. As shown in FIG. 9, the distributed computing system includes a computing node group 1 (including a computing node 1a and a computing node 1b), a computing node group 2 (including a computing node 2a and a computing node 2b), a backup node A, and a backup node B. If the management node detects that faults occur in both the computing node group 1 and the computing node group 2, and determines that faulty devices in which the faults occur are the computing node 1a in the computing node group 1 and the computing node 2a in the computing node group 2, the management node configures the switching device, to establish a data exchange path between the computing node 1a and the backup node A, and establish a data exchange path between the computing node 2a and the backup node B. In this way, network topology structures of a computing node cluster in the distributed computing system before and after the faults occur are equivalent.

**Case 2:** If the faulty device includes a second quantity of faulty accelerators, the switching device is configured, to establish a second data exchange path between a second quantity of backup accelerators in at least one backup node and at least one first accelerator via the switching device, where the second data exchange path is used for performing data exchange between the second quantity of backup accelerators and the at least one first accelerator, to cause the second quantity of backup accelerators to replace the second quantity of faulty accelerators to execute the computing task.

The first accelerator is an accelerator other than the faulty accelerator in the computing node group, and the second quantity is a positive integer. In the method shown in Case 2 is that, for the computing node group in which the fault occurs, based on the quantity of faulty accelerators in the group, the same quantity of backup accelerators are scheduled from a backup pool for replacement, to cause network topology structures of a computing node cluster in the distributed computing system before and after the fault occurs to be consistent.

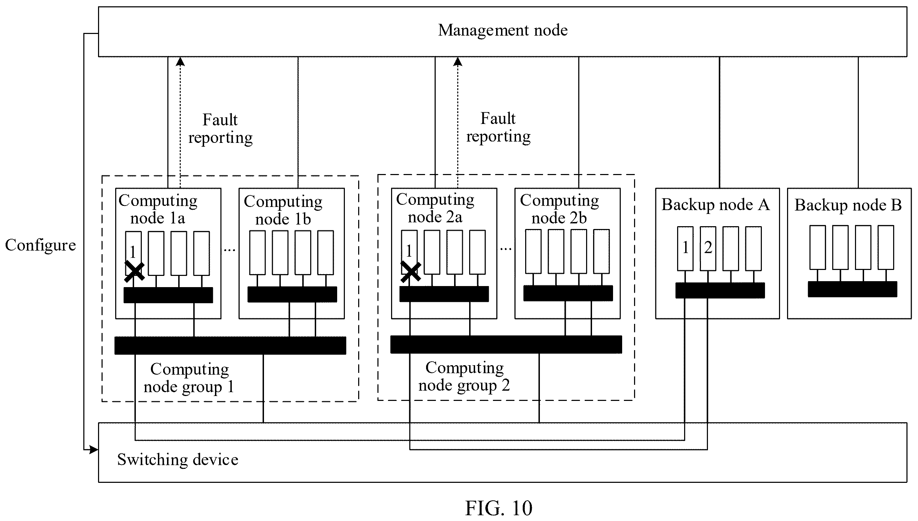

For example, FIG. 10 is a diagram of another fault replacement according to an embodiment of this application. As shown in FIG. 10, the distributed computing system includes a computing node group 1 (including a computing node 1a and a computing node 1b), a computing node group 2 (including a computing node 2a and a computing node 2b), a backup node A, and a backup node B. If the management node detects that faults occur in both the computing node group 1 and the computing node group 2, and determines that faulty devices in which the faults occur are an accelerator 1a-1 in the computing node 1a in the computing node group 1 and an accelerator 2a-1 in the computing node 2a in the computing node group 2, the management node configures the switching device, to establish a data exchange path between the accelerator 1a-1 and a backup accelerator A-1 in the backup node A, and establish a data exchange path between the accelerator 2a-1 and a backup accelerator A-2 in the backup node A. In this way, network topology structures of a computing node cluster in the distributed computing system before and after the faults occur are equivalent.

**Case 3:** If the faulty device includes a third quantity of faulty accelerators, a fourth quantity of nodes to which the third quantity of faulty accelerators belong is determined, and the switching device is configured, to establish a third data exchange path between a fourth quantity of backup nodes and the at least one first node via the switching device. The third data exchange path is used for performing data exchange between the fourth quantity of backup nodes and the at least one first node, to cause the fourth quantity of backup nodes to replace the node to which the third quantity of faulty accelerators belong to execute the computing task.

The first node is a node other than the faulty computing node in the computing node group, and both the third quantity and the fourth quantity are positive integers. In the method shown in Case 3 is that, for the computing node group in which the fault occurs, the quantity of nodes to which the faulty accelerator belongs is determined based on the quantity of faulty accelerators in the group, so that the same quantity of backup nodes are scheduled from a backup pool for replacement. In other words, a node on which the faulty accelerator is located is used as the faulty computing node for entire replacement, to cause network topology structures of a computing node cluster in the distributed computing system before and after the fault occurs to be equivalent.

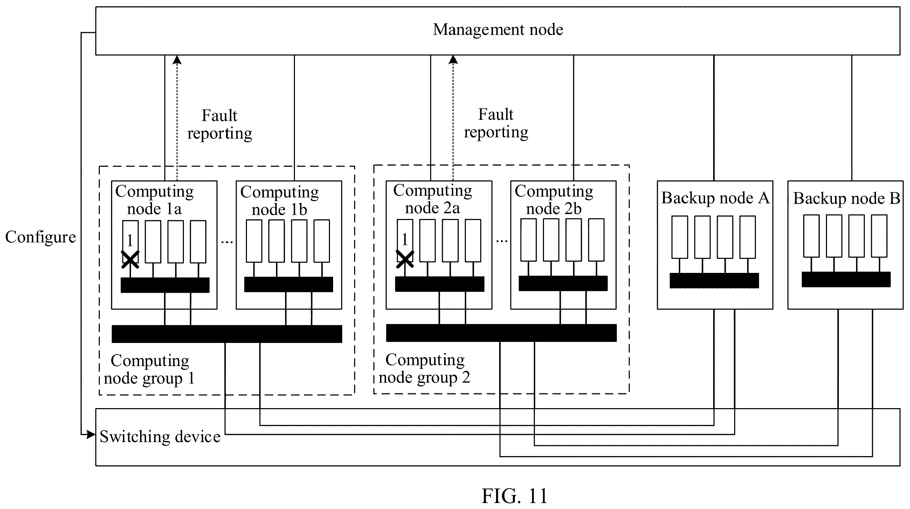

For example, FIG. 11 is a diagram of still another fault replacement according to an embodiment of this application. As shown in FIG. 11, the distributed computing system includes a computing node group 1 (including a computing node 1a and a computing node 1b), a computing node group 2 (including a computing node 2a and a computing node 2b), a backup node A, and a backup node B. If the management node detects that faults occur in both the computing node group 1 and the computing node group 2, and determines that faulty devices in which the faults occur are an accelerator 1a-1 in the computing node 1a in the computing node group 1 and an accelerator 2a-1 in the computing node 2a in the computing node group 2, the management node configures the switching device, to establish a data exchange path between the computing node a1 and the backup node A, and establish a data exchange path between the computing node 2a and the backup node B. In this way, network topology structures of a computing node cluster in the distributed computing system before and after the faults occur are equivalent.

It should be understood that the foregoing Case 1 to Case 3 and fault replacement manners shown in FIG. 9 to FIG. 11 are merely examples for description, and do not constitute limitations on this application. During actual application, the backup node and the backup accelerator in the backup node can be dynamically allocated based on requirements.

In some embodiments, the management node configures the switching device based on a communication bandwidth in the computing node group that is before the fault occurs, to establish the data exchange path between the backup node and the computing node group via the switching device, and cause data exchange between the backup node and the computing node group to be performed by using a same communication bandwidth as that before the fault occurs. For example, before the fault occurs, if data exchange between computing nodes in the computing node group is performed based on a first bandwidth to execute the computing task, after the backup node is connected to the computing node group, the data exchange between the backup node and the computing node group is performed based on the first bandwidth to execute the computing task. Similarly, before the fault occurs, if data exchange between accelerators in the computing node is performed based on a third bandwidth to execute the computing task, and the first bandwidth is less than or equal to the third bandwidth, after the backup node is connected to the computing node group, data exchange between backup accelerators in the backup node is performed based on the third bandwidth to execute the computing task. In this way, after the fault occurs, according to the fault handling method provided in this application, the network topology of the computing node cluster in the system and communication performance can remain unchanged after the fault replacement, thereby ensuring that execution efficiency of the computing task remains unchanged before and after the fault occurs.

In conclusion, in the fault handling method for a distributed computing system provided in this application, in the distributed computing system provided in this application, both the computing node group and the backup node access the switching device. Therefore, when detecting that the fault occurs in the computing node group, the management node may configure the switching device to establish the data exchange path between the backup node and the computing node group, so that the backup node can perform data exchange with the computing node group through the data exchange path, to replace the faulty device in which the fault occurs in the computing node group to execute the computing task. This greatly reduces fault handling costs while maintaining original system performance and a network topology. For example, if the distributed computing system includes 10 computing node groups, each computing node group includes 10 computing nodes, and each computing node includes eight accelerators, that is, the entire system includes 100 computing nodes (includes 800 accelerators), 1:N backup for the faulty device can be implemented by additionally configuring, in the distributed computing system, one switching device and two backup nodes that each includes eight backup accelerators (that is, one switching device and 16 backup accelerators). This effectively reduces networking costs. In addition, redundancy of a backup device is small in this manner, which does not easily cause a waste of resources. However, in a related technology, the distributed computing system also includes 10 computing node groups, each computing node group includes 10 computing nodes, and each computing node includes eight accelerators. If redundancy backup is performed on the nodes in the groups, at least 10 backup nodes (that is, 80 accelerators) need to be additionally configured. If redundancy backup is performed on the accelerators in the nodes, at least 100 accelerators need to be additionally configured. It can be learned that, in the related technology, costs are high, and redundancy is large, which easily causes a waste of resources.

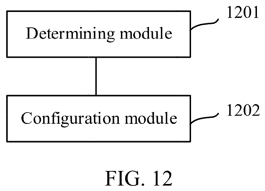

FIG. 12 is a diagram of a structure of a fault handling apparatus for a distributed computing system according to an embodiment of this application. The apparatus may implement some or all functions of the foregoing management node by using software, hardware, or a combination thereof. As shown in FIG. 12, the apparatus is used in a management node in the distributed computing system. The system further includes a switching device, a computing node group, and a backup node. The switching device is physically connected to the computing node group and the backup node separately. Each computing node in the computing node group includes a plurality of accelerators, and the backup node includes a plurality of backup accelerators. The apparatus includes a determining module 1201 and a configuration module 1202.

The determining module 1201 is configured to detect that a fault occurs in the computing node group, and determine a faulty device in which the fault occurs, where the faulty device is a faulty computing node or a faulty accelerator in the computing node group.

The configuration module 1202 is configured to configure the switching device, to establish a data exchange path between the backup node and the computing node group via the switching device, where the data exchange path is used for performing data exchange between the backup node and the computing node group, to cause the backup node to replace the faulty device to execute a computing task.

In some embodiments, the switching device is an optical switch, the optical switch includes a plurality of optical fiber ports, the plurality of optical fiber ports are configured to access the backup node and the computing node group, and the configuration module 1202 is configured to:
configure an optical path between a first optical fiber port and a second optical fiber port on the optical switch, to establish an optical path between the backup node and the computing node group via the optical switch, where the optical path is used for performing switching of an optical signal between the backup node and the computing node group, to cause the backup node to replace the faulty device to execute the computing task, the first optical fiber port is an optical fiber port for accessing the backup node, the second optical fiber port is an optical fiber port for accessing the computing node group, and the optical signal is used for carrying data corresponding to the computing task.

In some embodiments, the configuration module 1202 is configured to perform at least one of the following:
if the faulty device includes a first quantity of faulty computing nodes, configuring the switching device, to establish a first data exchange path between a first quantity of backup nodes and at least one first node via the switching device, where the first data exchange path is used for performing data exchange between the first quantity of backup nodes and the at least one first node, to cause the first quantity of backup nodes to replace the first quantity of faulty computing nodes to execute the computing task, and the first node is a node other than the faulty computing node in the computing node group;
if the faulty device includes a second quantity of faulty accelerators, configuring the switching device, to establish a second data exchange path between a second quantity of backup accelerators in at least one backup node and at least one first accelerator via the switching device, where the second data exchange path is used for performing data exchange between the second quantity of backup accelerators and the at least one first accelerator, to cause the second quantity of backup accelerators to replace the second quantity of faulty accelerators to execute the computing task, and the first accelerator is an accelerator other than the faulty accelerator in the computing node group; or
if the faulty device includes a third quantity of faulty accelerators, determining a fourth quantity of nodes to which the third quantity of faulty accelerators belong, and configuring the switching device, to establish a third data exchange path between a fourth quantity of backup nodes and the at least one first node via the switching device, where the third data exchange path is used for performing data exchange between the fourth quantity of backup nodes and the at least one first node, to cause the fourth quantity of backup nodes to replace the node to which the third quantity of faulty accelerators belong to execute the computing task.

According to the foregoing apparatus, in the distributed computing system provided in this application, both the computing node group and the backup node access the switching device. Therefore, when detecting that a fault occurs in the computing node group, the management node in the distributed computing system may configure the switching device to establish the data exchange path between the backup node and the computing node group, so that the backup node can perform data exchange with the computing node group through the data exchange path, to replace a faulty device in which the fault occurs in the computing node group to execute the computing task. This greatly reduces fault handling costs while maintaining original system performance and a network topology.

It should be noted that, when the fault handling apparatus for a distributed computing system provided in the foregoing embodiment performs fault handling, division of the foregoing functional modules is merely used as an example for description. During actual application, the foregoing functions may be allocated to different functional modules for implementation based on a requirement. In other words, an internal structure of the apparatus is divided into different functional modules to implement all or some of the foregoing described functions. In addition, the fault handling apparatus for a distributed computing system provided in the foregoing embodiment and the embodiment of the fault handling method for a distributed computing system belong to a same concept. For a specific implementation process, refer to the method embodiment. Details are not described herein again.

In this application, terms such as "first" and "second" are used to distinguish between same items or similar items that have basically same roles and functions. It should be understood that there is no logical or timing dependency between "first", "second", and "n^{th}", and neither a quantity nor an execution sequence is limited. It should also be understood that although the following descriptions use terms such as "first" and "second" to describe various elements, these elements should not be limited by the terms. These terms are simply used to distinguish one element from another. For example, without departing from the scope of the various examples, a first node may be referred to as a second node, and similarly, a second node may be referred to as a first node. Both the first node and the second node may be nodes, and in some cases may be separate and different nodes.

The term "at least one" in this application means one or more, and the term "a plurality of" in this application means two or more. For example, a plurality of nodes means two or more nodes.

The foregoing descriptions are merely specific implementations of this application, but are not intended to limit the protection scope of this application. Any equivalent modification or replacement readily figured out by a person skilled in the art within the technical scope disclosed in this application shall fall within the protection scope of this application. Therefore, the protection scope of this application shall be subject to the protection scope of the claims.

All or some of the foregoing embodiments may be implemented by using software, hardware, firmware, or any combination thereof. When software is used to implement embodiments, the foregoing embodiments may be implemented completely or partially in a form of program structure information. The program structure information includes one or more program instructions. When the program instructions are loaded and executed on a computing device, the procedures or functions according to embodiments of this application are all or partially generated.

A person of ordinary skill in the art may understand that all or some of the steps of embodiments may be implemented by hardware or a program instructing related hardware. The program may be stored in a computer-readable storage medium. The storage medium may be a read-only memory, a magnetic disk, an optical disc, or the like.

In conclusion, the foregoing embodiments are merely intended for describing the technical solutions of this application, but not for limiting this application. Although this application is described in detail with reference to the foregoing embodiments, a person of ordinary skill in the art should understand that modifications to the technical solutions described in the foregoing embodiments or equivalent replacements to some technical features thereof may be made without departing from the scope of the technical solutions of embodiments of this application.

## Claims

1. A distributed computing system, wherein the system comprises a management node, a switching device, a computing node group, and a backup node, the switching device is physically connected to the computing node group and the backup node separately, each computing node in the computing node group comprises a plurality of accelerators, and the backup node comprises a plurality of backup accelerators; and
the management node is configured to:
detect that a fault occurs in the computing node group, and determine a faulty device in which the fault occurs, wherein the faulty device is a faulty computing node or a faulty accelerator in the computing node group; and
configure the switching device, to establish a data exchange path between the backup node and the computing node group via the switching device, wherein the data exchange path is used for performing data exchange between the backup node and the computing node group, to cause the backup node to replace the faulty device to execute a computing task.

2. The system according to claim 1, wherein the switching device is an optical switch, the optical switch comprises a plurality of optical fiber ports, and the plurality of optical fiber ports are configured to access the backup node and the computing node group.

3. The system according to claim 2, wherein the management node is configured to:
configure an optical path between a first optical fiber port and a second optical fiber port on the optical switch, to establish an optical path between the backup node and the computing node group via the optical switch, wherein
the optical path is used for performing switching of an optical signal between the backup node and the computing node group, to cause the backup node to replace the faulty device to execute the computing task, the first optical fiber port is an optical fiber port for accessing the backup node, the second optical fiber port is an optical fiber port for accessing the computing node group, and the optical signal is used for carrying data corresponding to the computing task.

4. The system according to claim 2 or 3, wherein computing nodes in the computing node group are connected to each other via a first switching component, at least one port of the first switching component is configured to access the optical switch, and the first switching component is a switch or a switching chip.

5. The system according to any one of claims 2 to 4, wherein the backup accelerators in the backup node are connected to each other via a second switching component, at least one port of the second switching component is configured to access the optical switch, and the second switching component is a switch or a switching chip.

6. The system according to any one of claims 1 to 5, wherein the management node is configured to perform at least one of the following:
if the faulty device comprises a first quantity of faulty computing nodes, configuring the switching device, to establish a first data exchange path between a first quantity of backup nodes and at least one first node via the switching device, wherein the first data exchange path is used for performing data exchange between the first quantity of backup nodes and the at least one first node, to cause the first quantity of backup nodes to replace the first quantity of faulty computing nodes to execute the computing task, and the first node is a node other than the faulty computing node in the computing node group;
if the faulty device comprises a second quantity of faulty accelerators, configuring the switching device, to establish a second data exchange path between a second quantity of backup accelerators in at least one backup node and at least one first accelerator via the switching device, wherein the second data exchange path is used for performing data exchange between the second quantity of backup accelerators and the at least one first accelerator, to cause the second quantity of backup accelerators to replace the second quantity of faulty accelerators to execute the computing task, and the first accelerator is an accelerator other than the faulty accelerator in the computing node group; or
if the faulty device comprises a third quantity of faulty accelerators, determining a fourth quantity of nodes to which the third quantity of faulty accelerators belong, and configuring the switching device, to establish a third data exchange path between a fourth quantity of backup nodes and the at least one first node via the switching device, wherein the third data exchange path is used for performing data exchange between the fourth quantity of backup nodes and the at least one first node, to cause the fourth quantity of backup nodes to replace the node to which the third quantity of faulty accelerators belong to execute the computing task.

7. The system according to any one of claims 1 to 6, wherein data exchange between the computing nodes in the computing node group is performed based on a first bandwidth; and
the backup node is configured to perform data exchange with the computing node group through the data exchange path based on the first bandwidth, to replace the faulty device to execute the computing task.

8. The system according to claim 7, wherein the system comprises a plurality of computing node groups, each computing node group comprises a same quantity of computing nodes, data exchange between the computing node groups is performed based on a second bandwidth, and the first bandwidth is greater than or equal to the second bandwidth.

9. The system according to claim 8, wherein bandwidths for data exchange between computing nodes in different computing node groups are different, and the bandwidths for data exchange between computing nodes in different computing node groups are all greater than or equal to the second bandwidth.

10. The system according to any one of claims 7 to 9, wherein each computing node in the computing node group comprises a same quantity of accelerators, data exchange between the accelerators is performed based on a third bandwidth, and the first bandwidth is less than or equal to the third bandwidth.

11. The system according to claim 10, wherein data exchange between the backup accelerators in the backup node is performed based on the third bandwidth.

12. The system according to any one of claims 1 to 11, wherein the distributed computing system is configured to execute a distributed parallel training task of an AI model, and the faulty device is configured to execute a subtask of the distributed parallel training task.

13. A fault handling method for a distributed computing system, applied to a management node in the distributed computing system, wherein the system further comprises a switching device, a computing node group, and a backup node, the switching device is physically connected to the computing node group and the backup node separately, each computing node in the computing node group comprises a plurality of accelerators, the backup node comprises a plurality of backup accelerators, and the method comprises:
detecting that a fault occurs in the computing node group, and determining a faulty device in which the fault occurs, wherein the faulty device is a faulty computing node or a faulty accelerator in the computing node group; and
configuring the switching device, to establish a data exchange path between the backup node and the computing node group via the switching device, wherein the data exchange path is used for performing data exchange between the backup node and the computing node group, to cause the backup node to replace the faulty device to execute a computing task.

14. The method according to claim 13, wherein the switching device is an optical switch, the optical switch comprises a plurality of optical fiber ports, the plurality of optical fiber ports are configured to access the backup node and the computing node group, and the configuring the switching device to establish the data exchange path between the backup node and the computing node group via the switching device comprises:
configuring an optical path between a first optical fiber port and a second optical fiber port on the optical switch, to establish an optical path between the backup node and the computing node group via the optical switch, wherein
the optical path is used for performing switching of an optical signal between the backup node and the computing node group, to cause the backup node to replace the faulty device to execute the computing task, the first optical fiber port is an optical fiber port for accessing the backup node, the second optical fiber port is an optical fiber port for accessing the computing node group, and the optical signal is used for carrying data corresponding to the computing task.

15. The method according to claim 13 or 14, wherein the configuring the switching device, to establish the data exchange path between the backup node and the computing node group via the switching device comprises at least one of the following:
if the faulty device comprises a first quantity of faulty computing nodes, configuring the switching device, to establish a first data exchange path between a first quantity of backup nodes and at least one first node via the switching device, wherein the first data exchange path is used for performing data exchange between the first quantity of backup nodes and the at least one first node, to cause the first quantity of backup nodes to replace the first quantity of faulty computing nodes to execute the computing task, and the first node is a node other than the faulty computing node in the computing node group;
if the faulty device comprises a second quantity of faulty accelerators, configuring the switching device, to establish a second data exchange path between a second quantity of backup accelerators in at least one backup node and at least one first accelerator via the switching device, wherein the second data exchange path is used for performing data exchange between the second quantity of backup accelerators and the at least one first accelerator, to cause the second quantity of backup accelerators to replace the second quantity of faulty accelerators to execute the computing task, and the first accelerator is an accelerator other than the faulty accelerator in the computing node group; or
if the faulty device comprises a third quantity of faulty accelerators, determining a fourth quantity of nodes to which the third quantity of faulty accelerators belong, and configuring the switching device, to establish a third data exchange path between a fourth quantity of backup nodes and the at least one first node via the switching device, wherein the third data exchange path is used for performing data exchange between the fourth quantity of backup nodes and the at least one first node, to cause the fourth quantity of backup nodes to replace the node to which the third quantity of faulty accelerators belong to execute the computing task.

16. A management device, wherein the management device comprises a processor and a memory, and the processor is configured to execute at least one segment of program code stored in the memory, to cause the management device to perform the fault handling method for a distributed computing system according to any one of claims 13 to 15.

17. A computer-readable storage medium, wherein the computer-readable storage medium is configured to store at least one segment of program code, and when the at least one segment of program code is run on a management device, the management device is caused to perform the fault handling method for a distributed computing system according to any one of claims 13 to 15.

18. A computer program product, wherein when the computer program product runs on a management device, the management device is caused to perform the fault handling method for a distributed computing system according to any one of claims 13 to 15.

19. A device cluster, wherein the device cluster comprises a management device, a switching device, and at least one computing device, each device comprises a processor and a memory, and the processor of each device is configured to execute at least one segment of program code stored in the memory of each device, to cause the device cluster to implement a function of the distributed computing system according to any one of claims 1 to 12.

20. A computer-readable storage medium, wherein the computer-readable storage medium is configured to store at least one segment of program code, and when the at least one segment of program code is executed by a device cluster, the device cluster is caused to implement a function of the distributed computing system according to any one of claims 1 to 12.

21. A computer program product, wherein when the computer program product runs on a device cluster, the device cluster is caused to implement a function of the distributed computing system according to any one of claims 1 to 12.
